(19) Europäisches Patentamt
European Patent Office
Office européen des brevets

(11) EP 0 588 483 B1

(12) **EUROPEAN PATENT SPECIFICATION**

(45) Date of publication and mention
of the grant of the patent:
**19.11.1997 Bulletin 1997/47**

(51) Int. Cl.⁶: $B24B\ 45/00$, $B27B\ 5/32$, $F16B\ 33/00$, $F16B\ 37/00$, $F16D\ 1/06$

(21) Application number: **93306227.5**

(22) Date of filing: **06.08.1993**

(54) **Tightening screw**

Anziehbare Mutter

Vis de serrage

(84) Designated Contracting States:
**DE FR GB IT**

(30) Priority: **31.08.1992 JP 257419/92**

(43) Date of publication of application:
**23.03.1994 Bulletin 1994/12**

(60) Divisional application:
**94200362.5 / 0 600 854**

(73) Proprietors:
• **Nakamura, Daijiro**
**Ono-shi, Hyogo 675-13 (JP)**
• **Kabushiki Kaisha Delta**
**Kobe-shi, Hyogo (JP)**

(72) Inventor: **Nakamura, Daijiro**
**Ono-shi, Hyogo 675-13 (JP)**

(74) Representative:
**Bankes, Stephen Charles Digby et al**
**BARON & WARREN**
**18 South End**
**Kensington**
**London W8 5BU (GB)**

(56) References cited:
EP-A- 0 034 640          EP-A- 0 272 725
EP-A- 0 408 314          EP-A- 0 497 138
WO-A-88/05386          DE-A- 3 012 836

EP 0 588 483 B1

## Description

The invention relates to a tightening screw to be used as a tightening screw (for example, a nut) for tightening a rotary tool such as a wheel of a hand grinder or a circular saw to a threaded mounting part (for example, male threading) spirally provided in a drive shaft, which is capable of tightening powerfully with a small rotary input, and being easily loosened, and regulating excessive tightening.

To mount a rotary tool such as a grinding wheel or circular saw on a driving shaft, hitherto, a flange and male threads are formed at an end portion of the driving shaft, the rotary tool is fitted to the male thread part, and a tightening screw with female threads such as a nut is fitted on its outer part. By tightening the nut, the rotary tool is fixed between the nut and the flange.

In the tightening and loosening operation of such a nut, however, a tool such as a wrench is generally used, and therefore a sufficient tightening may not be obtained because only this tool is used for amplifying the force to tighten or loosen the nut.

Besides, in the use of such a rotary tool, if the rotary tool is used with an impact, the nut may be tightened, more than desired, by the impact and its reaction, and the nut may become too tight. The nut may not be removable by a tool such as a wrench, and the nut may not be removable unless the rotary tool is broken in an extreme case.

A tightening screw according to the preamble of claim 1 is known, for example, from WO-A-88/05386.

The invention relates to a tightening screw comprising:

a screw member having a shaft core part with female threads or male threads formed thereon,

a flange ring fitted to the outer periphery of the screw member to contact with an object to be tightened,

an operating ring for feeding a rotational force by fitting oppositely to the flange ring, on an outer surface of the screw member, and

a rotating ring rotated by turning operation of the operating ring, being freely held at eccentricity so as to be rotatable about the inner circumference of the operating ring, wherein

a first tube is formed in a core part of the rotating ring, and an outer gear is formed in the outside of the first tube,

the screw member extends inside and outside the first tube of the rotating ring,

a second tube is formed on the outer surface of the screw member, and an inner gear is formed inside the second tube which is partly engaged with the outer gear of the rotating ring and has a different number teeth therefrom, and

the flange ring is disposed in opposition to the rotating ring, and engaging parts on mutually confronting surfaces thereof are engaged with each other while defining the revolution and allowing the rotation of the rotating ring.

It is a first object of the invention to provide a tightening screw capable of providing a large tightening force or loosening force with a small rotary input, mounting the object securely, tightening or loosening directly by hand, without using a power tool, because of the generation of a powerful rotational force increased in torque, and enhancing the attaching and detaching manipulation of the tightening screw.

It is a second object of the invention to provide a tightening screw capable of being attached and detached quickly because the rotary motion of the operating ring is directly the rotary motion of the screw member until the flange ring of the tightening screw abuts against the object to be tightened to fix the rotary motion of the flange ring.

It is a third object of the invention to provide a tightening screw capable of preventing excessive tightening of the tightening screw against the object to be tightened, by interspacing a flange ring for keeping a relative rotary motion between the revolving ring and the object to be tightened, so that the revolving ring may not rotate together with the object to be tightened.

It is a fourth object of the invention to provide a tightening screw capable of being formed in a small, compact size without increasing the thickness of the tightening screw by obtaining a sufficient range for the female threads of the screw member relative to which the bolt is tightened, by disposing the screw member inside the rotating ring.

It is a fifth object of the invention to provide a tightening screw capable of increasing the tightening or loosening torque significantly by obtaining a large reduction ratio by a difference in the number of teeth between inner and outer gears.

It is a sixth object of the invention to provide a tightening screw capable of preventing the screw member from being tightened more than necessary by impact or its reaction so that it becomes unable to be released, when the object to be tightened, such as rotary tool, is used with impact, by setting the unidirectional torque limiter at, for example, a force capable of being operated directly by hand, so that excessive tightening may be avoided, and that manual releasing of the screw member may be easy when releasing the tightening screw.

In the accompanying drawings:

Fig. 1 is a sectional view of a tightening screw of embodiment 1.

Fig. 2 is an exploded sectional view of the tightening screw shown in Fig. 1.

Fig. 3 is a plan view of a rotating ring shown in Fig. 1.

Fig. 4 is a longitudinal sectional view of a tightening screw of embodiment 2.

Fig. 5 is an exploded longitudinal sectional view of the tightening screw shown in Fig. 4.

Fig. 6 is a sectional view showing the left side of the rotating ring and the engaging parts of the inner gear and outer gear.

Fig. 7 is a right side view of a sliding member.

Fig. 8 is a right side view showing the way of mounting a sliding member on a flange ring.

Fig. 9 is a longitudinal sectional view of a bolt type tightening screw of embodiment 3.

Embodiment 1

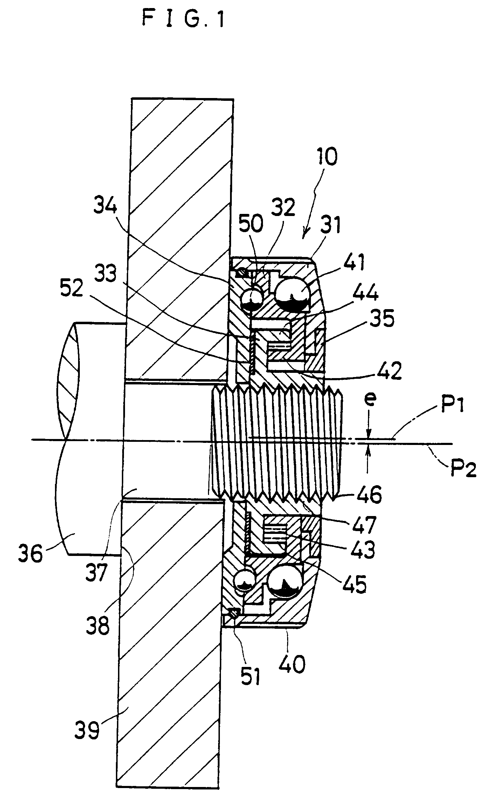

A first embodiment of the invention is described below with reference to Figs 1 to 3.

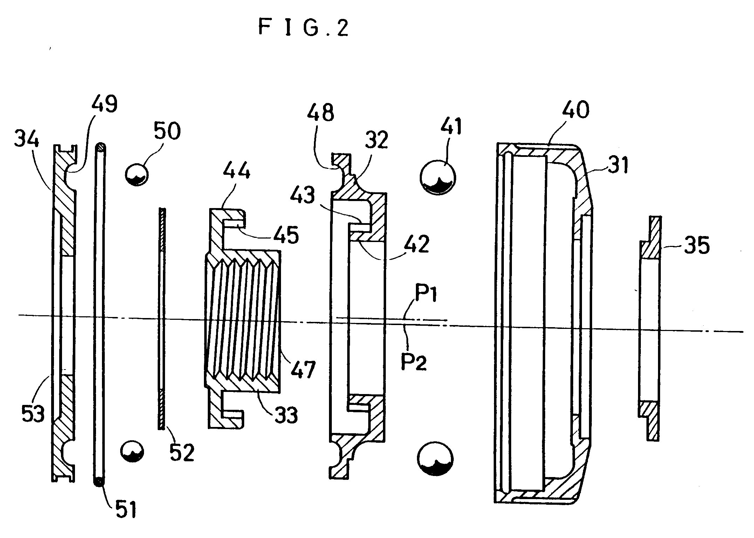

The drawings show a tightening screw, and in Fig. 1 and Fig. 2, the tightening screw 10 is composed of an operating ring 31, a rotating ring 32, a screw member 33, a flange ring 34, and a holding ring 35. The tightening screw 10 is screwed to a mounting bolt 37 of a drive shaft 36, and tightens and fixes a rotary tool 39, for example, a wheel of a hand grinder, against a flange 38 formed on the drive shaft 36.

The operating ring 31 serves also as the housing, and opens in the central part in a pi-section, and a knurling 40 is cut in the outer periphery to receive manual rotary input, while a bearing 41 is provided in the inner periphery to rotatably hold the rotating ring 32. The center of rotation P1 of the rotating ring 32 is eccentrically held at an eccentricity e to the center of rotation P2 of the operating ring 31.

A tube 42 is formed in the shaft core part of the rotating ring 32, an outer gear 43 is formed on the outer periphery of the tube 42, and the number of teeth of this outer gear 43 is defined at 38.

The screw member 33 has a tube 44 formed on its outer periphery, and the inner periphery of the tube 44 has an inner gear 45 having 40 teeth with a difference of 2 teeth from the number of teeth of the outer gear 43 of the rotating ring 32. Hence the effective diameter of the inner gear 45 is slightly larger than the effective diameter of the outer gear 43, corresponding to the difference of 2 teeth.

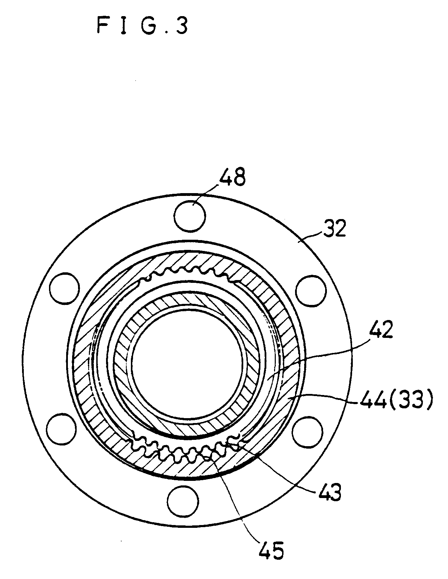

When the inner gear 45 is partially engaged with the outer gear 43 as shown in Fig. 3, since the inner gear 45 has a larger diameter than the outer gear 43, its center P1 is deviated from the center P2 of the outer gear 43. This deviation of position, that is, the eccentricity, is the eccentricity e mentioned above.

Therefore, the inner gear 45 is partially engaged with the outer gear 43, and the rotating ring 32 and screw member 33 are overlaid inside and outside. In the shaft core part of the screw member 33, female threads 47 to be engaged with male threads 46 of the mounting bolt 37 are cut.

The central part of the flange ring 34 has an insertion hole 53 for receiving the mounting bolt 37. In the mutually confronting sides of the flange ring 34 and the rotating ring 32 (see Fig. 3) engaging recesses 48 and 49 are provided. The recesses 48 and 49 are engaged by balls 50 and regulate the rotation of the rotating ring 32. The flange ring 34 is held axially relative to the operating ring 31 by an O-ring 51 situated on its periphery.

Between the confronting surfaces of the flange ring 34 and screw member 33, a thrust washer 52 is inserted, and the side surface of the flange ring 34 projects slightly outwardly from the end surface of the operating ring 31.

The holding ring 35 is press-fitted onto the outer end periphery of the screw member 33, bears the operating ring 31, and also prevents the operating ring 31 and rotating ring 32 from slipping out.

To mount the rotary tool 39 on the mounting bolt 37 of the drive shaft 36 with the tightening screw 10, the flange ring side of the tightening screw 10 is set opposite to the rotary tool 39, and the female threads 47 of the screw member 33 of the tightening screw 10 are engaged with the male threads 46 of the mounting bolt 37, and the knurled 40 part of the operating ring 31 is directly rotated by hand, thereby engaging the male threads 46 and female threads 47.

At the time of screwing, if the flange ring 34 does no contact the rotary tool 39, the operating ring 31, rotating ring 32, screw member 33, and flange ring 34 are rotated together by the assembling load, and the rotation of the operating ring 31 directly becomes the rotation of screw member 33, so that the tightening screw 10 is fed in thread pitches.

When the flange ring 34 abuts against the rotary tool 39 and its rotating is loaded to stop the rotation of the flange ring 34 with the load, revolution of the rotating ring 32 is stopped by the engagement between the engaging recesses 48 and 49 with the flange ring 34 and the balls 50. The rotation of the operating ring 31 causes the rotating ring 32 to rotate, and this rotation causes the screw member 33 to rotate, due to the difference in the number of teeth between the outer gear 43 of the rotating ring 32 and the inner gear 45 of the screw member 33 (this rotating direction is same as the rotating direction of the operating ring 31). This rotation becomes a rotation of a lower speed than the rotation of the operating ring 31, that is, the reduced speed thread pitch feed. This great speed reduction results in a great torque increase, and the screw member 33 is engaged with the bolt 37 to be tightened by the thread pitch feed of increased torque and reduced speed. Consequently the rotary tool 39, as the object of tightening, is tightened and fixed to the flange 38 of the bolt 37 with a large tightening force of increased torque.

Incidentally, the reduced speed of rotation of the screw member relative to that of the operating ring 31 is

(number of teeth of inner gear 45 - number of teeth of outer gear 43)/number of teeth of outer gear 43 , and in this embodiment, a great speed reduction of

(40 teeth - 38 teeth)/38 teeth = 2/38 = 1/19 is obtained.

When loosening the tightening screw 10, since the flange ring 34 is already hitting against the rotary tool 39 and its rotation is arrested, the rotating ring 32 is in a rotatable state, and therefore as the rotating motion of the operating ring 31 in the loosening direction rotates the rotating ring 32, the screw member 33 is fed in thread pitches at reduced speed by a large rotational force of increased torque as for tightening so the tightening screw may be loosened.

As the screw member 33 is loosened, the flange ring 34 is spaced from the rotary tool 39, and its rotation is permitted, the entire tightening screw 10 is rotated in one body, and the rotation of the operating ring directly becomes the rotation of the screw member 33, thereby making it possible to loosen the tightening screw quickly.

In embodiment 1, the tightening screw 10 is rotated manually, but a wrench or other power tool may be used. In this case, it is possible to tighten and loosen the tightening screw with a less effort. The tightening screw of the invention is realized by forming female threads 47 in the screw member 33 so that it may be used as general nut.

Although the screw member 33 in embodiment 1 is used as a nut by forming female threads, it may be also used a a bolt by forming male threads in the screw member 33.

Embodiment 2

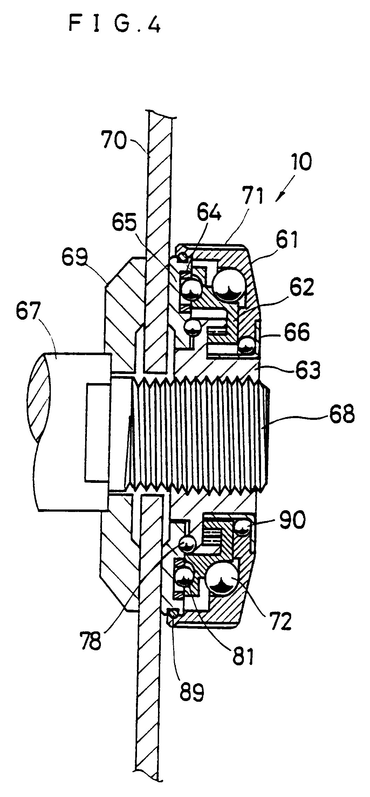

A second embodiment of the invention is described in detail below with reference to Figs 4 to 8.

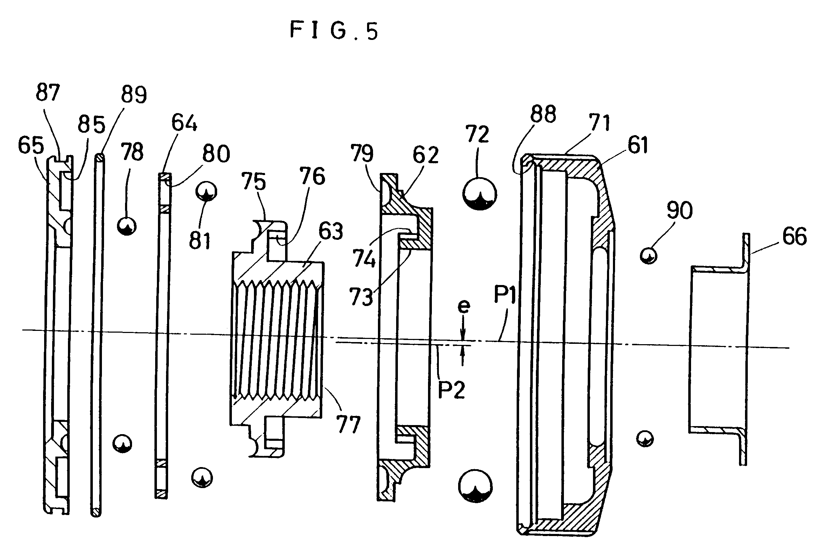

The embodiment relates to a tightening screw having a function of preventing excessive tightening through a torque limiter installed at the tightening side, and in Fig 4 and Fig. 5, the tightening screw 10 is composed of an operating ring 61, a rotating ring 62, ring-shaped screw member 63, a ring-shaped sliding member 64, a flange ring 65, and a holding ring 66. This tightening screw 10 is screwed to a mounting bolt 68 of a drive shaft 67, and tightens and fixes a rotary tool 70, for example, the wheel of a hand grinder, together with an inner flange 69 on the drive shaft 67.

The operating ring 62 is a ring in a pi-section, has an opening in the central part, and a knurling 71 cut in the outer periphery to receive a manual rotary input. The rotating ring 62 is rotatably held by a bearing 72 in the inner periphery of the operating ring 61, and the center of rotation P1 of the rotating ring 62 is held eccentric, at an eccentricity e, to the center of rotation P2 of the operating ring 61.

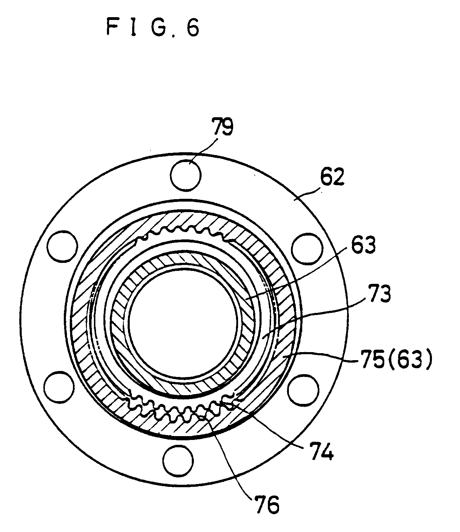

As shown in Fig. 6, a tube 73 is formed on the shaft core part of the rotating ring 62, an outer gear 74 is formed on the outer periphery of the tube 73, and the number of the teeth of this gear 74 is 38.

On the screw member 63, a tube 75 is formed on its outer periphery, and the inner periphery of this tube 75 has an inner gear 76 having 40 teeth, there being a difference in the number of teeth of 2 from the outer gear 74 of the rotating ring 62. This inner gear 76 is partially engaged with the outer gear 74. The rotating ring 62 and screw member 63 are overlaid inside and outside.

In the shaft core part of the screw member 63, female threads 77 are cut so as to be engaged with the mounting bolt 68.

The middle opening part of the flange ring 65 is freely held on the outer periphery of the screw member 63 and bearings 78 are placed at their mutually confronting surfaces. In the mutually confronting parts of the flange ring 65 and the rotating ring 62 (see Fig. 4), the engaging means for regulating the revolution of the rotating ring 62 and permitting its rotation is formed. This engaging means includes an engaging recess 79 formed in the rotating ring 62, an engaging recess 80 formed in the sliding member 64, and a ball 81 engaged therewith. Such engaging means are formed at six positions.

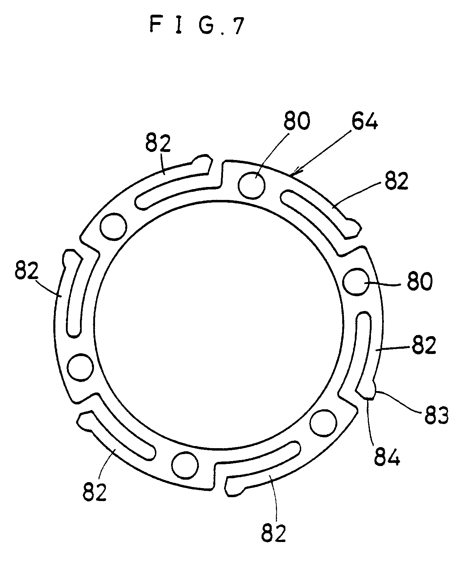

The sliding member 64 constitutes a unidirectional torque limiter together with the flange ring 65 as shown in Fig. 7. It is in a ring form and includes six elastic parts 82 formed by cutting in at six equally spaced locations on the periphery of the member. A sliding surface 83 is formed, at the side corresponding to the tightening direction of the screw member 63, on the outer periphery of the free end of each elastic part 82, while a sloping surface 84 is formed on the side corresponding to the releasing direction. The elastic force of the elastic parts 82 is set by the thickness and cutting depth of the corresponding parts 82.

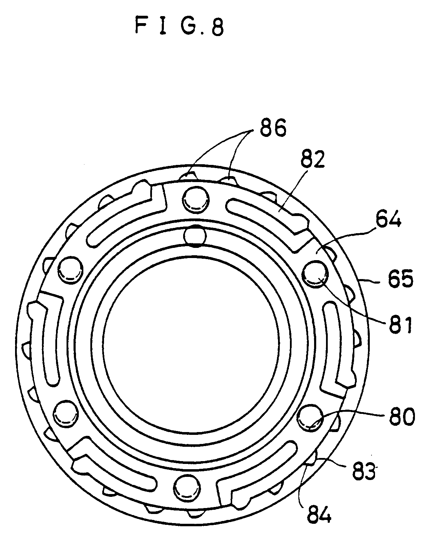

The sliding member 64 is fitted into a groove 85 formed in the inner periphery at the inside of the flange ring, as shown in Fig. 4, and moreover as shown in Fig. 8, a multiplicity (24, in this embodiment) of engaging recesses 86 are formed on the inner surface of the groove 85, corresponding to the sliding surfaces 83 and sloping surfaces 84 of the elastic parts of the sliding member 64. When the tightening load acts on the engaging recess 80 of the sliding member 64 through the balls 81 in the engaged state of the sliding surfaces 83 and sloping surfaces 84 of these elastic parts 82 and the engaging recesses 86, and the load exceeds a preset value, the elastic parts 82 are deformed elastically, and the sliding surfaces 83 and the engaging recesses 86 are disengaged. The sliding member 64 then slides in the groove 85 of the flange ring 65.

Returning to Fig. 4 and Fig. 5, the outer periphery of the flange ring 65 is overlaid with the inner periphery of the end of the operating ring 61, and grooves 87 and 88 are formed in the confronting sides, and a stopping ring 89 is provided in these grooves 87 and 88. The stopping ring 89 may be an 0-ring for sealing purposes.

The holding ring 66 is press-fitted to the end outer periphery of the screw member 63, and the operating ring 61 bears against it through a bearing 90, thereby preventing the operating ring from slipping out.

Using the thus composed tightening screw 10, to mount the rotary tool 70 on the mounting bolt 68 of the drive shaft 67, the flange ring side 65 of the tightening screw 10 is set against the rotary tool 70, the female threads 77 of the screw member 63 of the tightening screw 10 are matched with the mounting bolt 68, and the knurling 71 of the operating ring 61 is directly rotated by hand to screw in the female threads 77.

At the time of screwing, if the flange ring 65 is not in contact with the rotary tool 70, the operating ring 61, the rotating ring 62, screw member 63, and flange ring 65 are rotated together by the assembling load, and the rotation of the operating ring 61 directly becomes the rotation of the screw member 63, so that the tightening screw 10 is fed in thread pitches.

When the flange ring 65 abuts against the rotary tool 70 and its rotation is loaded to stop the rotation of the flange ring 64 with the load, the rotating ring 62 is prevented from rotating by the engagement between the engaging recesses 79 and 80 with the flange ring 65 and the balls 81. The rotation of the operating ring 61 causes the rotating ring 62 to rotate , and this rotation causes the screw member 63 to rotate, due to the difference in the number of teeth between the outer gear 74 of the rotating ring 62 and the inner gear 76 of the screw member 63 (this rotating direction is the same as the rotating direction of the operating ring 61). This rotation becomes a rotation of a lower speed than the rotation of the operating ring 61, that is, the reduced speed thread pitch feed. This great speed reduction results in a great torque increase, and the screw member 63 is engaged with the bolt 68 to be tightened by the thread pitch feed of increased torque and reduced speed. Consequently the rotary tool 70, as the object of tightening, is tightened and fixed to the inner flange 69 with a large tightening force of increased torque.

Incidentally, the reduced speed rotation of the screw member 63 to the operating ring 61 is

(number of teeth of inner gear 76 - number of teeth of outer gear 74)/number of teeth of outer gear 74 , and in this embodiment, a great speed reduction of

(40 teeth - 38 teeth)/38 teeth = 2/38 = 1/19 is obtained.

When the tightening force of the tightening screw 10 reaches a preset value, that is, the action force set in the elastic parts 82 of the sliding member 64, the elastic parts 82 are deformed elastically, and the sliding surfaces 83 become disengaged from the engaging recesses 86 of the flange ring 65, and the sliding member 64 rotates (idles) in the groove 85 of the flange ring 65, so that the rotating ring 62 is deprived of its rotation, and only revolves while the outer gear 74 rotates about the circumference of the inner gear 76 of the screw member 63, thereby cutting off torque transmission.

Therefore if the operating ring 61 is rotated in the tightening direction, the screw member 63 will not be tightened.

Thus, when the rotary tool 70 is used with impact, if rotational force in the tightening direction acts on the operating ring 61, since the torque transmission is cut off as mentioned above, the screw member 63 will not be tightened more by this rotational force.

When loosening the tightening screw 10, since the flange ring 65 is already abutting against the rotary tool 70 and its rotation has been arrested, the rotating ring 62 is in a rotating state and the rotating operation of the operating ring 61 in the loosening direction (cancelling direction) will cause the rotating ring 62 to rotate, and with a large force of increased torque. As for tightening, the screw member 63 is fed in thread pitches at reduced speed, so that the tightening screw may be loosened.

Moreover, rotation in the loosening direction does displace the elastic parts 82 as the sloping surfaces 84 of the elastic parts 82 of the sliding member 64 act on the engaging recesses 86 of the flange ring 65, and therefore the torque limiter is in an inactive state, so that it is possible to loosen the tightening screw by a greater force than that used for tightening.

When the screw member 63 is loosened, the flange ring 65 is spaced from the rotary tool 70 and its rotation is permitted, the entire tightening screw 10 rotates in one body, and the rotation of the operating ring 61 becomes directly the rotation of the screw member 63, thereby loosening the tightening screw quickly.

In embodiment 2, the tightening screw 10 is rotated by hand, but a wrench or power tool may be used. In such a situation, it is possible to tighten and loosen the tightening screw with less effort.

Embodiment 3

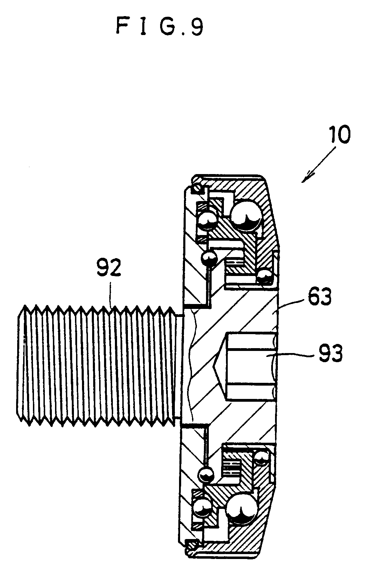

The tightening screw 10 shown in Fig. 4 is in a nut form, but it may alternatively be in a bolt form. That is, as in embodiment 4 shown in Fig. 9 male threads 92 are formed at one side of the screw member 63 of the tightening screw 10, while a hexagonal hole 93 for inserting a hexagonal wrench is formed on the other side.

In Fig. 9, the other parts are the same as the parts of the tightening screw 10 of embodiment 2 shown in Figs. 4 to 8, and detailed description of these parts is accordingly omitted.

In the case of the bolt embodiment shown in Fig. 9, the same action and effect as in the tightening screw 10 of embodiment 2 will occur.

The torque transmission in the tightening screw 10 of embodiment 2 is achieved by outer gear 74 of rotating ring 62, inner gear 76 of screw member 63, engaging recesses 79 and 80, rotating ring 62, sliding member 64, and balls 81. This torque transmission forms a differential speed reduction mechanism and provided a torque increase function. When only the unidirectional torque limiting function is required without the torque increase function, the rotating ring 62 is omitted, and confronting sides are formed between the operating ring 61 and the screw member 63 and unidirectional torque limiting may be provided by the sliding member 64 being situated between these confronting sides. Alternatively the sliding member 64 may be provided on the side of the rotating ring 62.

**Claims**

1. A tightening screw (10) comprising:

   a screw member (33) having a shaft core part with female threads or male threads (46) formed thereon,
   a flange ring (34) fitted to the outer periphery of the screw member (33) to contact with an object (39) to be tightened,
   an operating ring (31) for feeding a rotational force by fitting oppositely to the flange ring (34) on an outer surface of the screw member (33), and
   a rotating ring (32) rotated by turning operation of the operating ring (31), being freely held at eccentricity so as to be rotatable about the inner circumference of the operating ring (31), characterised in that

   a first tube (42) is formed in a core part of the rotating ring (32), and an outer gear (43) is formed on the outside of the first tube (42),
   the screw member (33) extends inside and outside the first tube (42) of the rotating ring (32),
   a second tube (44) is formed on the outer surface of the screw member (33), and an inner gear (45) is formed inside the second tube (44) which is partly engaged with the outer gear (43) of the rotating ring (32) and has a different number of teeth therefrom, and
   the flange ring (34) is disposed in opposition to the rotating ring (32), and engaging parts (48, 49) on mutually confronting surfaces thereof are engaged with each other while defining the revolution and allowing the rotation of the rotating ring (32).

2. The tightening screw of claim 1 including a unidirectional torque limiter (64) for cutting off transmission of torque in the tightening direction from the operating ring (61) to the object (70) to be tightened at a specific load.

3. The tightening screw of claim 2 wherein the unidirectional torque limiter (64) includes

   a torque transmitting member interspaced between the screw member (63) and operating ring (61) for transmitting the rotational force of the operating ring (61) to the screw member (63).

4. The tightening screw of claim 2 or claim 3, wherein the unidirectional torque limiter (64) is composed of a sliding member capable of deforming elastically for cutting off transmission of torque to the rotating ring in the tightening direction at a specific load, the sliding member being located in an engaging part of either the flange ring (65) or the rotating ring (62).

**Patentansprüche**

1. Anziehbare Mutter (10), die folgendes umfasst:

   ein Schraubglied (33) mit einem Wellenkernteil mit darauf gebildeten Aussengewinden oder Innengewinden (46),
   einen Flanschring (34), der auf der äusseren Peripherie des Schraubglieds (33) angebracht ist, um mit einem Gegenstand (39) in Kontakt zu kommen, der angezogen werden soll,
   einen Betriebsring (31), um eine Drehkraft durch Anbringen von dem Flanschring (34) gegenüber auf einer äusseren Oberfläche des Schraubglieds (33) zuzuführen, und
   einen Drehring (32), der durch Wendebetrieb des Betriebsrings (31) gedreht wird, der mit einer Exzentrizität freigehalten wird, um um den inneren Umfang des Betriebsrings (31) gedreht zu werden, dadurch gekennzeichnet, dass

   ein erstes Rohr (42) in einem Kernteil des Drehrings (32) gebildet ist, und ein äusseres Zahnrad (43) auf der Aussenseite des ersten Rohrs (42) gebildet ist,
   das Schraubglied (33) sich innerhalb und ausserhalb des ersten Rohrs (42) des Drehrings (32) erstreckt,

ein zweites Rohr (44) auf der äusseren Oberfläche des Schraubglieds (33) gebildet ist,

und ein inneres Zahnrad (42) in dem zweiten Rohr (44) gebildet ist, das teilweise mit dem äusseren Zahnrad (43) des Drehrings (32) in Eingriff steht, und eine von ihm verschiedene Anzahl von Zähnen hat, und der Flanschring (34) gegenüber dem Drehring (32) angeordnet ist, und Eingriffsteile (48, 49) auf sich gegenseitig gegenüberliegenden Oberflächen davon miteinander in Eingriff stehen und die Drehung des Drehrings (32) gestatten.

**2.** Anziehbare Mutter nach Anspruch 1, die einen in einer Richtung wirkenden Drehmomentbegrenzer (64) einschliesst, um die Übertragung eines Drehmoments in der Anziehrichtung von dem Betriebsring (61) zu dem Gegenstand (70) zu beenden, der mit einer spezifischen Last angezogen werden soll.

**3.** Anziehbare Mutter nach Anspruch 2, in der der in eine Richtung wirkende Drehmomentbegrenzer (64) ein Drehmomentübertragungsglied einschliesst, das zwischen dem Schraubglied (63) und dem Betriebsring (61) eingeordnet ist, um die Drehkraft des Betriebsrings (61) auf das Schraubglied (63) zu übertragen.

**4.** Anziehbare Mutter nach Anspruch 2 oder Anspruch 3, in der der in eine Richtung wirkende Drehmomentbegrenzer (64) aus einem gleitenden Glied zusammengesetzt ist, das sich elastisch verformen kann, um die Übertragung eines Drehmoments auf den Drehring in der Anziehrichtung mit einer spezifischen Last zu beenden, wobei das gleitende Glied in einem eingreifenden Teil von dem Flanschring (65) oder dem Drehring (62) angeordnet ist.

## Revendications

**1.** Une vis de serrage (10) comportant:

un élément de vis (33) sous forme d'axe noyau élément sur lequel sont formés des filetages mâles ou femelles (46);

une bride annulaire (34) montée sur le pourtour extérieur de l'élément de vis (33) pour venir en contact avec un article (39) à serrer,

un anneau de commande (31) pour apporter une force de rotation en se montant en sens inverse à la bride annulaire (34) sur une surface extérieure de l'élément de vis (33), et

un anneau de rotation (32) dont la rotation est effectuée par le mouvement de l'anneau de commande (31), étant retenu libre en ovalité de telle façon à permettre la rotation autour de la circonférence intérieure de l'anneau de commande (31), caractérisé en ce que

un premier tube (42) est formé dans un élément noyau de l'anneau de rotation (32), et un engrenage extérieur (43) est formé à l'extérieur du premier tube (42),

l'élément de vis (33) s/tend à l'intérieur et à l'extérieur du premier tube (42) de l'anneau de rotation (32),

un deuxième tube (44) est formé sur la surface extérieure de l'élément de vis (33), et un engrenage intérieur (45) est formé à l'intérieur du deuxième tube (44) qui est en engrènement partiel avec l'engrenage extérieur (43) de l'anneau de rotation (32) et comporte relativement un nombre différent de dents, et

la bride annulaire (34) est montée en opposition à l'anneau de rotation (32) et les éléments d'engrènement (48, 49) sur les surfaces en confrontation mutuelle sont engagés l'un avec l'autre tout en définissant le tour et permettant la rotation de l'anneau de rotation (32).

**2.** La vis de serrage à la revendication 1 comportant un limiteur unidirectionnel de couple (64) assurant la coupure de la transmission de couple dans le sens du serrage à partir de l'anneau de commande (61) vers l'article (70) à serrer avec un couple prédéterminé.

**3.** La vis de serrage à la revendication 2 dont le limiteur unidirectionnel de couple (64) comporte

un élément de transmission de couple interposé entre l'élément de vis (63) et l'anneau de commande (61) pour transmettre la force de rotation de l'anneau de rotation (61) à l'élément de vis (63).

**4.** La vis de serrage à la revendication 2 ou à la revendication 3, dont le limiteur unidirectionnel de couple (64) consiste d'un élément coulissant susceptible de déformation élastique pour assurer la coupure de la transmission de couple à l'anneau de rotation dans le sens du serrage sous une charge prédéterminée, l'élément coulissant étant situé dans un élément d'engrènement de la bride annulaire (65) ou de l'anneau de rotation (62).

F I G . 1

F I G . 2

FIG.3

F I G . 4

F I G . 5

FIG. 6

F I G . 7

F I G. 8

F I G . 9

10

92

63

93